# EUROPÄISCHE PATENTANMELDUNG

(11) **EP 3 222 398 A1**
(43) Veröffentlichungstag der Anmeldung: **27.09.2017**
(21) Anmeldenummer: 17000350.3
(22) Anmeldetag: 03.03.2017
(51) Int. Cl.: B29C 33/20, B29C 33/22, B29C 33/26, B29C 33/30, F03D 3/06

(54) **FORMWERKZEUGANORDNUNG**

(30) Priorität: 21.03.2016 DE 102016003326
(71) Anmelder: Carbon Rotec GmbH & Co. KG, 27809 Lemwerder (DE)
(72) Erfinder: Kehlenbeck, Hanno, 28329 Bremen (DE); Friedrichs, Matthias, 28757 Bremen (DE)
(74) Vertreter: Heiland, Karsten

(57) **Zusammenfassung**

Die Erfindung betrifft eine Formwerkzeuganordnung, insbesondere zum Herstellen von Rotorblättern von Windkraftanlagen, mit einer ersten Formschale (20) und einer zweiten Formschale (22) zur Aufnahme je eines Werkstückteils, wobei die beiden Formschalen in einer Nahposition einander zugewandt sind aber nicht aneinander anliegen, mit Sicherungsmitteln zum Halten eines Werkstückteils in wenigstens einer der Formschalen und mit Zentriermitteln zum Zentrieren der beiden Formschalen zueinander in der Nahposition oder während einer Annäherung der Formschalen. Zentriermittel und Sicherungsmittel sind mechanisch miteinander gekoppelt.

## Beschreibung

Die Erfindung betrifft eine Formwerkzeuganordnung, insbesondere zum Herstellen von Rotorblättern für Windkraftanlagen, mit einer ersten Formschale und einer zweiten Formschale zur Aufnahme je eines Werkstückteils, wobei die beiden Formschalen in einer Nahposition einander zugewandt sind aber nicht aneinander anliegen mit Sicherungsmitteln zum Halten eines Werkstückteils in wenigstens einer der Formschalen und mit Zentriermitteln zum Zentrieren der beiden Formschalen zueinander in der Nahposition oder während einer Annäherung der Formschalen. Daneben betrifft die Erfindung ein Verfahren zum Herstellen eines Werkstücks aus zwei halbschalenartigen Werkstückteilen, insbesondere zum Herstellen eines Rotorflügels für Windkraftanlagen.

Bei der Herstellung von Rotorblättern für Windkraftanlagen werden typischerweise zunächst zwei Halbschalen aus Verbundwerkstoff in den jeweils dafür vorgesehenen und nach oben offenen Formschalen vorgefertigt. Anschließend werden die Formschalen mit den darin liegenden Halbschalen derart aufeinander positioniert, dass ein geschlossenes Rotorblattprofil entsteht.

Vorzugsweise ist eine der Formschalen stationär angeordnet, während die andere Formschale um 180° drehbar und in einer Überkopfposition auf der zuvor genannten Formschale ablegbar ist. Hierzu können die beiden Formschalen über ein Gelenk miteinander verbunden sein, deren Gelenklinie (Schwenkachse) in Längsrichtung der Formschalen verläuft.

Mit der erfindungsgemäßen Formwerkzeuganordnung soll das ungewollte Lösen der Halbschalen aus den Formschalen vermieden werden, insbesondere in einer Überkopfposition einer der Formschalen. Vorzugsweise sollen die beiden Formschalen relativ zueinander genau positionierbar und zugfest miteinander verbindbar sein. Die Halbschalen werden nachfolgend als Werkstückteile bezeichnet.

Insbesondere soll die Bedienung der Formwerkzeuganordnung einfacher und sicherer möglich sein.

Zur Lösung der Aufgabe weist die erfindungsgemäße Formwerkzeuganordnung die Merkmale des Anspruchs 1 auf. Die Sicherungsmittel halten das Werkstückteil insbesondere in der Nahposition der Formschalen und/oder beim Drehen. Vorzugsweise handelt es sich um mechanische Sicherungsmittel, die am Rand der Formschale angeordnet sind und einen Rand des Werkstückteils beaufschlagen, so dass das Werkstück nicht aus der jeweiligen Formschale herausfallen kann. Bedingt durch die große Ausdehnung der Formschalen für die Herstellung von Rotorblättern, können entlang des Formschalenrandes viele Sicherungsmittel mit definierten Abständen zueinander angeordnet sein. Außerdem sind Zentriermittel vorgesehen, zum Zentrieren der beiden Formschalen zueinander in der Nahposition oder während einer Annäherung der Formschalen. Die Zentriermittel sind vorzugsweise den Sicherungsmitteln räumlich zugeordnet und/oder in derselben Anzahl vorgesehen. Zugleich sind Sicherungsmittel und Zentriermittel mechanisch miteinander gekoppelt. Dies ermöglicht eine einfachere und sicherere Bedienung der Anordnung.

Nach einem weiteren Gedanken der Erfindung sind Zentriermittel und Sicherungsmittel durch gemeinsame Antriebsmittel miteinander gekoppelt. Beispielsweise sind Sicherungsmittel und Zentriermittel so ausgeführt, dass sie verdreht und linear bewegt werden sollen. Ein gemeinsames Antriebsmittel führt die Drehung und ein weiteres gemeinsames Antriebsmittel führt die Linearbewegung aus. Auch können die Antriebsmittel zu einer einzigen Antriebseinrichtung zusammengefasst sein.

Nach einem weiteren Gedanken der Erfindung beinhalten die Zentriermittel jeweils Zentrierkopf und Zentrieraufnahme, wobei der Zentrierkopf der einen Formschale zugeordnet ist und die Zentrieraufnahme der anderen Formschale, und wobei Zentrierkopf und Zentrieraufnahme vorzugsweise passend zueinander konisch ausgebildet sind. Zentrierkopf und Zentrieraufnahme sind hinsichtlich ihrer Form so ausgebildet, dass sie aufeinander zubewegt werden können und dabei ineinander greifen können, auch wenn sie nicht genau miteinander fluchten. Gerade die konische Ausbildung bewirkt diese Art einer selbststätigen Zentrierung. Vorzugsweise wird der Zentrierkopf in Richtung auf die Zentrieraufnahme bewegt und fährt dabei in die Zentrieraufnahme ein, oder umgekehrt. Die konische Form kann dabei auf eine Richtung quer zur Bewegungsrichtung beschränkt sein, etwa wie bei einem Keil.

Nach einem weiteren Gedanken der Erfindung sind Zentriermittel und Sicherungsmittel derart mechanisch miteinander gekoppelt, dass bei einer Bewegung von Zentrierkopf oder Zentrieraufnahme in Richtung auf die jeweils andere Formschale zugleich das Sicherungsmittel oder ein Teil desselben in Richtung auf die andere Formschale bewegt wird. Durch die Kupplung von Zentriermittel und Sicherungsmittel (oder eines Teils desselben) kann ein gemeinsamer Antrieb verwendet werden.

Nach einem weiteren Gedanken der Erfindung weist eine Formwerkzeuganordnung die Merkmale des Anspruchs 5 auf. Insbesondere sind Verriegelungsmittel für eine Zugkräfte aufnehmende Verbindung zwischen den beiden Formschalen vorgesehen. Die Verriegelungsmittel wirken vorzugsweise formschlüssig und erlauben das Aufbringen von Kräften zur Bewegung der beiden Formschalen gegeneinander.

Nach einem weiteren Gedanken der Erfindung sind Sicherungsmittel und Verriegelungsmittel durch gemeinsame Antriebsmittel miteinander gekoppelt. Beispielsweise sind Sicherungsmittel und Verriegelungsmittel so ausgeführt, dass sie verdreht und linear bewegt werden sollen. Ein gemeinsames Antriebsmittel führt die Drehung und ein weiteres gemeinsames Antriebsmittel führt die Linearbewegung aus. Auch können die Antriebsmittel zu einer einzigen Antriebseinrichtung zusammengefasst sein.

Nach einem weiteren Gedanken der Erfindung beinhalten die Verriegelungsmittel jeweils Verriegelungskopf und Verriegelungsaufnahme, wobei der Verriegelungskopf der einen Formschale zugeordnet ist und die Verriegelungsaufnahme der anderen Formschale, und wobei der Verriegelungskopf vorzugsweise durch Stecken und Drehen mit der Verriegelungsaufnahme verbindbar ist. Verriegelungskopf und Verriegelungsaufnahme weisen insbesondere einen Vorsprung und eine Nut auf, wie bei einem Bajonettverschluss.

Nach einem weiteren Gedanken der Erfindung sind Sicherungsmittel und Verriegelungsmittel mechanisch miteinander gekoppelt, derart, dass bei einer Bewegung von Verriegelungskopf oder Verriegelungsaufnahme zugleich das Sicherungsmittel bewegt wird. Durch die mechanische Kopplung reicht ein gemeinsamer Antrieb für das Sicherungsmittel und das Verriegelungsmittel aus.

Nach einem weiteren Gedanken der Erfindung ist der Verriegelungskopf drehbar, aus einer Einfahrposition in eine Verriegelungsposition, insbesondere aus einer Anfangsposition in die Einfahrposition. Vorzugsweise erstreckt sich die Drehbarkeit über etwa 270°.

Nach einem weiteren Gedanken der Erfindung wird der Verriegelungskopf in einem Bereich zwischen Anfangsposition und Einfahrposition bewegt, wenn ein Haltearm des Sicherungsmittels von einer Sicherungsposition in eine freie Position bewegt wird. Wenn sich der Haltearm in Sicherungsposition befindet, ist das betreffende Werkstückteil in der Formschale gesichert bzw. gehalten. In der freien Position des Haltearms ist das Werkstückteil in der Formschale nicht gesichert. In der Einfahrposition ist der Verriegelungskopf in die Verriegelungsaufnahme hineinbewegbar. In einer Verriegelungsposition besteht eine Zugkräfte aufnehmende Verbindung zwischen Verriegelungskopf und Verriegelungsaufnahme.

Nach einem weiteren Gedanken der Erfindung ist dem Verriegelungsmittel eine Lineareinheit zugeordnet, mit der insbesondere ein Verriegelungskopf im Wesentlichen in Richtung senkrecht zu einer Öffnungsebene der zugeordneten Formschale bewegbar ist. Die Lineareinheit ermöglicht auf einfache Weise eine gezielte Bewegungsrichtung des Verriegelungskopfes.

Nach einem weiteren Gedanken der Erfindung sind die Formschalen mittels der Lineareinheit aus der Nahposition in Richtung auf eine Kontaktposition bewegbar, in der die Formschalen und/oder in den Formschalen liegende Werkstückteile miteinander Kontakt haben. In der Kontaktposition sind die Werkstückteile miteinander verbindbar, insbesondere durch Verkleben.

Nach einem weiteren Gedanken der Erfindung ist dem Verriegelungsmittel eine Dreheinheit zugeordnet, mit der ein Verriegelungskopf relativ zu einer Verriegelungsaufnahme verdrehbar ist. Die Drehung erfolgt vorzugsweise um eine Achse parallel zur Bewegung einer ebenfalls vorgesehenen Lineareinheit. Insbesondere liegt die Drehachse in der Bewegungsflucht der Lineareinheit. Dreheinheit und Lineareinheit können Teile einer Verfahreinheit sein. Auch können Dreheinheit und Lineareinheit unabhängig voneinander mit eigenen Antrieben versehen oder mechanisch miteinander gekoppelt sein.

Nach einem weiteren Gedanken der Erfindung ist mit der Dreheinheit zugleich ein Haltearm des Sicherungsmittels verschwenkbar. Die Dreheinheit ist in dieser Ausführung gemeinsamer Antrieb für den Verriegelungskopf und den Haltearm.

Nach einem weiteren Gedanken der Erfindung ist der Verriegelungskopf zugleich Zentrierkopf, während die Verriegelungsaufnahme zugleich Zentrieraufnahme ist. Die Kombination beider Funktionen in jeweils einem Bauteil reduziert die Komplexität der Anordnung insgesamt.

Nach einem weiteren Gedanken der Erfindung ist ein Haltearm des Sicherungsmittels um eine Schwenkachse schwenkbar und um eine hierzu senkrechte Klappachse klappbar. Dadurch kann der Haltearm so bewegt werden, dass eine Beeinträchtigung anderer Teile vermieden wird.

Nach einem weiteren Gedanken der Erfindung sind Sicherungsmittel, Zentriermittel und/oder Verriegelungsmittel Teile einer Verfahreinheit, wobei entlang wenigstens einer der beiden Formschalen, nämlich an deren Längsseiten, mehrere Verfahreinheiten in definierten Abständen vorgesehen sind. Vorzugsweise sind die Verfahreinheiten beidseitig der Formschale angeordnet, etwa alle 2 Meter. Entsprechend weist die jeweils andere Formschale alle 2 Meter hierzu korrespondierende Mittel auf.

Nach einem weiteren Gedanken der Erfindung weist eine Formwerkzeuganordnung die Merkmale des Anspruchs 18 auf. Insbesondere vorgesehen sind eine erste Formschale und eine zweite Formschale zur Aufnahme je eines Werkstückteils, wobei die beiden Formschalen in einer Nahposition einander zugewandt sind aber nicht aneinander anliegen, und wobei Zentriermittel vorgesehen sind, zum Zentrieren der beiden Formschalen zueinander in der Nahposition, insbesondere in Verbindung mit weiter oben angegebenen Merkmalen. Dabei sind den Zentriermitteln Verriegelungsmittel zugeordnet, derart, dass über die Zentriermittel und die Verriegelungsmittel eine Verbindung zwischen den beiden Formschalen herstellbar ist, wobei die Verbindung auch Zugkräfte aufnimmt. Insbesondere ist die Verbindung formschlüssig. Vorzugsweise nimmt die Verbindung auch Druckkräfte auf.

Nach einem weiteren Gedanken der Erfindung wirken die Zentriermittel in wenigstens einer Richtung zentrierend, insbesondere quer zu einer Längsrichtung der Formschalen. Die Längsrichtung der Formschalen entspricht dabei der Längsrichtung der fertigen Rotorblätter. Vorteilhafterweise wirken die Zentriermittel zentrierend in alle Richtungen parallel zu einer Öffnungsebene der Formschale.

Nach einem weiteren Gedanken der Erfindung sind die Zentriermittel parallel zu einer Öffnungsebene der Formschale verstellbar, insbesondere quer zu einer Längsrichtung der Formschale. Durch geeignete Verstellorgane können beispielsweise Zentrierkopf und/oder Zentrierkopf zur Feinjustierung der Zentrierung verstellt werden.

Nach einem weiteren Gedanken der Erfindung sind die Verriegelungsmittel mit einer Antriebseinheit verbunden, zum Bewegen der beiden Formschalen aus der Nahposition in eine noch nähere Position und umgekehrt. In diesem Fall ist die Antriebseinheit vorzugsweise eine Lineareinheit und Teil einer Verfahreinheit, welchem Verriegelungsmittel zugeordnet sind.

Das erfindungsgemäße Verfahren weist die Merkmale des Anspruchs 22 auf. Es geht um die Herstellung eines Werkstücks aus zwei halbschalenartigen Werkstückteilen, insbesondere eines Rotorflügels für Windkraftanlagen, unter Verwendung der erfindungsgemäßen Formwerkzeuganordnung. Vorzugsweise wird ein in einer nach oben offenen Formschale liegendes erstes Werkstückteil mit einem in einer nach oben offenen zweiten Formschale liegenden zweiten Werkstückteil verbunden wird und hierzu die erste Formschale um 180° gedreht und auf die zweite Formschale bewegt. Zunächst wird das erste Werkstückteil randseitig durch Sicherungsmittel in der ersten Formschale gesichert. Dann wird die erste Formschale um 180° gedreht und in eine Nahposition oberhalb der zweiten Formschale bewegt. Dabei kann die erste Formschale in einem Gelenksystem gehalten sein, dauerhaft oder nur zeitweise. Danach werden die Sicherungsmittel gelöst, und vorzugsweise auch das Gelenksystem. Anschließend werden die beiden Formschalen über mehrere, Zugkräfte aufnehmende Verbindungen miteinander verbunden. Schließlich wird die erste Formschale weiter abgesenkt, bis die Werkstückteile Kontakt haben. Insbesondere wird hierzu die erste Formschale aktiv an die zweite Formschale herangezogen. Nach dem Verbinden der beiden Werkstückteile wird die erste Formschale aktiv von der zweiten Formschale gelöst, insbesondere abgehoben. Dabei löst sich das Werkstück aus der ersten Formschale.

Weitere Merkmale der Erfindung ergeben sich aus der Beschreibung im Übrigen und aus den Ansprüchen. Vorteilhafte Ausführungsbeispiele der Erfindung werden nachfolgend anhand von Zeichnungen näher erläutert. Es zeigen:
- Fig. 1: einen Querschnitt eines Teils einer beweglichen Formschale mit Verfahreinheit, Dreheinheit, Haltearm und Verriegelungskopf, in einer Ausgangsstellung,
- Fig. 2: einen Teil einer stationären Formschale,
- Fig. 3: die mobile Formschale gemäß Fig. 1 mit eingeschwenktem Haltearm oberhalb eines Formschalenrandes,
- Fig. 4: die mobile Formschale gemäß Fig. 3, mit auf dem Formschalenrand (Quetschkante) aufliegenden Haltearm,
- Fig. 5: Teile der beiden Formschalen, nämlich die um 180° über die stationäre Formschale geschwenkte mobile Formschale, wobei die beiden Formschalen in einer Nahposition noch einen Abstand zueinander aufweisen und der Haltearm am Formschalenrand der mobilen Formschale anliegt,
- Fig. 6: die beiden Formschalen gemäß Fig. 5, jedoch mit vom Formschalenrand leicht abgehobenen Haltearm,
- Fig. 7: die beiden Formschalen gemäß Fig. 6, jedoch mit vom Formschalenrand weggeschwenkten und an eine Verfahreinheit angeklappten Haltearm,
- Fig. 8: die Formschalen gemäß Fig. 7, jedoch mit in eine Verriegelungsaufnahme eingefahrenem Verriegelungskopf,
- Fig. 9: die beiden Formschalen gemäß Fig. 8, jedoch mit in der Verriegelungsaufnahme verdrehtem Verriegelungskopf, zur Herstellung einer formschlüssigen Verbindung (zum Verriegeln),
- Fig. 10: die Formschalen gemäß Fig. 9, jedoch mit abgesenkter mobiler Formschale, so dass diese auf der stationären Formschale aufliegt,
- Fig. 11: die Formschale gemäß Fig. 10, jedoch mit auseinanderbewegten Formschalen bei noch bestehender Verriegelung,
- Fig. 12: die beiden Formschalen gemäß Fig. 11, jedoch mit gedrehtem und so entriegeltem Verriegelungskopf,
- Fig. 13: die Formschalen gemäß Fig. 12, jedoch mit aus der Verriegelungsaufnahme herausgefahrenem Verriegelungskopf,
- Fig. 14: die Formschalen gemäß Fig. 13, jedoch mit zurückgedrehtem Verriegelungskopf, analog Fig. 11.
- Fig. 15: die mobile Formschale analog Fig. 1, jedoch mit fest abstehendem Haltearm,
- Fig. 16: einen Teil der stationären Formschale analog Fig. 2, mit größerer Ausführung der Verriegelungsaufnahme,
- Fig. 17: Teile der beiden Formschalen gemäß den Fig. 15 und 16, analog zur Darstellung in Fig. 9, nämlich mit in der Verriegelungsaufnahme verriegeltem Verriegelungskopf,
- Fig. 18: die Formschalen wie in Fig. 17, in einer Position analog Fig. 14,
- Fig. 19a: eine besondere Ausführungsform eines Verriegelungskopfes mit einer Verriegelungsaufnahme in einer Nahposition,
- Fig. 19b: analog Fig. 19a, jedoch in eingefahrener Position,
- Fig. 19c: analog Fig. 19a, jedoch in Verriegelungsposition.

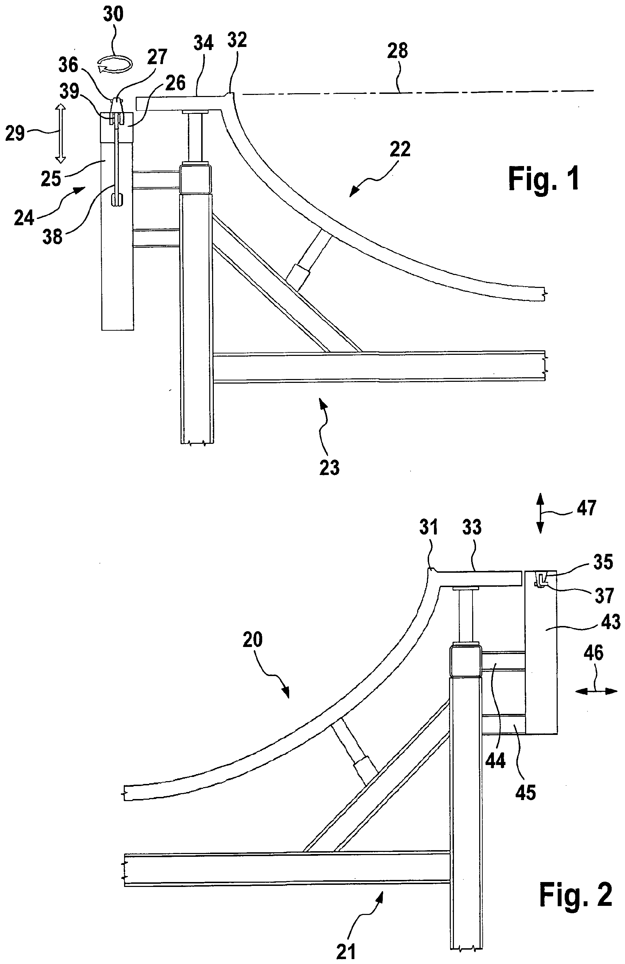

Eine Formwerkzeuganordnung weist eine stationäre Formschale 20 auf einem Gestell 21 auf, siehe Figur 2, welche nur die rechte Hälfte von Formschale 20 und Gestell 21 zeigt.

Dazu passend ist eine weitere Formschale 22 an einem bewegbaren Gestell 23 vorgesehen, siehe Figur 1. Mittel zum Bewegen des Gestells 23 mit der Formschale 22 sind grundsätzlich bekannt. Beispielsweise kann das bewegbare Gestell 23 über ein nicht gezeigtes Gelenk mit dem stationären Gestell 21 verbunden sein. Entsprechend erstreckt sich dann eine Gelenkachse in Längsrichtung der Formschale, in diesem Fall senkrecht zur Bildebene. Die Formwerkzeuganordnung ist zur Herstellung von Rotorblättern vorgesehen.

Der Formschale 22 zugeordnet und am Gestell 23 vorgesehen ist eine Verfahreinheit 24 für ein Verriegelungsmittel. Die Verfahreinheit 24 weist hier eine Lineareinheit 25 und eine Dreheinheit 26 auf. Mittels der Lineareinheit 25 ist ein Verriegelungskopf 27 des Verriegelungsmittels in Richtung senkrecht zu einer Öffnungsebene 28 der Formschale 22 bewegbar, siehe Doppelpfeil 29. Die Dreheinheit 26 ermöglicht eine Drehung des Verriegelungskopfes 27 um eine Achse senkrecht zur Öffnungsebene 28, siehe Rotationspfeil 30.

In die beiden Formschalen 20, 22 wird nicht gezeigtes Fasermaterial eingelegt und mit Kunstharz getränkt. Dabei reichen die Fasermatten über Quetschkanten 31, 32 bis auf Formenränder 33, 34. Nach dem Aushärten des Gießharzes wird die Formschale 22 mit dem Gestell 23 um 180 Grad geschwenkt und auf der stationären Formschale 20 abgesetzt, so dass in den Formschalen 20, 22 entstandene Halbschalen als Werkstückteile miteinander verbindbar sind.

Bestandteil des genannten Verriegelungsmittels ist auch eine Verriegelungsaufnahme 35 am Gestell 21 der stationären Formschale 20. Verriegelungskopf 27 und Verriegelungsaufnahme 35 sind korrespondierend zueinander ausgebildet. Der Verriegelungskopf 27 ist konisch bzw. kegelförmig mit an seiner Spitze quer abstehenden Nasen 36. Die Verriegelungsaufnahme 35 weist eine konische bzw. kegelförmige Vertiefung mit L-förmigen Nuten 37 zur Aufnahme der Nasen 36 auf.

Durch die kegelige/konische Gestaltung bilden Verriegelungskopf 27 und Verriegelungsaufnahme 35 nicht nur das Verriegelungsmittel, sondern zugleich ein Zentriermittel bzw. Zentrierkopf und Zentrieraufnahme. Der Verriegelungskopf 27 kann mit relativ viel Spiel in die Verriegelungsaufnahme 35 eintreten. Dadurch können Toleranzen parallel zur Öffnungsebene 28 ausgeglichen werden.

Der Verfahreinheit 24 ist außerdem ein Sicherungsmittel zugeordnet, welches hier einen Haltearm 38 aufweist, der an einem Gelenk 39 am Verriegelungskopf 27 bzw. an der Dreheinheit 26 schwenkbar gehalten ist. Figur 1 zeigt eine Parkposition des Haltearms 38 senkrecht zur Öffnungsebene 28 bzw. an der Lineareinheit 25 anliegend.

Der Formschale 22 mit dem bewegbaren Gestell 23 sind an ihren Längsseiten (nicht gezeigt) mehrere Verfahreinheiten 24 mit den beschriebenen Merkmalen zugeordnet, beispielsweise alle zwei Meter eine Verfahreinheit. Korrespondierend dazu weist die stationäre Formschale 20 mit dem Gestell 21 eine entsprechende Anzahl an Verriegelungsaufnahmen 35 an ihren beiden Längsseiten auf.

Lineareinheit 25 und Dreheinheit 26 können pneumatisch, hydraulisch, elektrisch oder elektromagnetisch angetrieben sein. Die Aktion der Dreheinheit 26 kann auch zwangsgeführt in Abhängigkeit von einer Bewegung der Lineareinheit 25 erfolgen. Vorzugsweise hat die Dreheinheit 26 einen Drehbereich von 270 Grad und trägt sowohl den Haltearm 38, als auch den Verriegelungskopf 27. Ausgehend von der in Figur 1 gezeigten Parkstellung der Dreheinheit 26 bei 0 Grad ergeben sich drei Bereiche von je 90 Grad:
Bereich 0 bis 90 Grad mit Verriegelungsfunktion (wird weiter unten erläutert) und mit eingeklapptem Haltearm 38,
Bereich 90 bis 180 Grad: Ausklappen des Haltearms,
Bereich 180 bis 270 Grad: Einschwenken des Haltearms in eine Sicherungsposition (auch als Arbeitsposition bezeichnet).

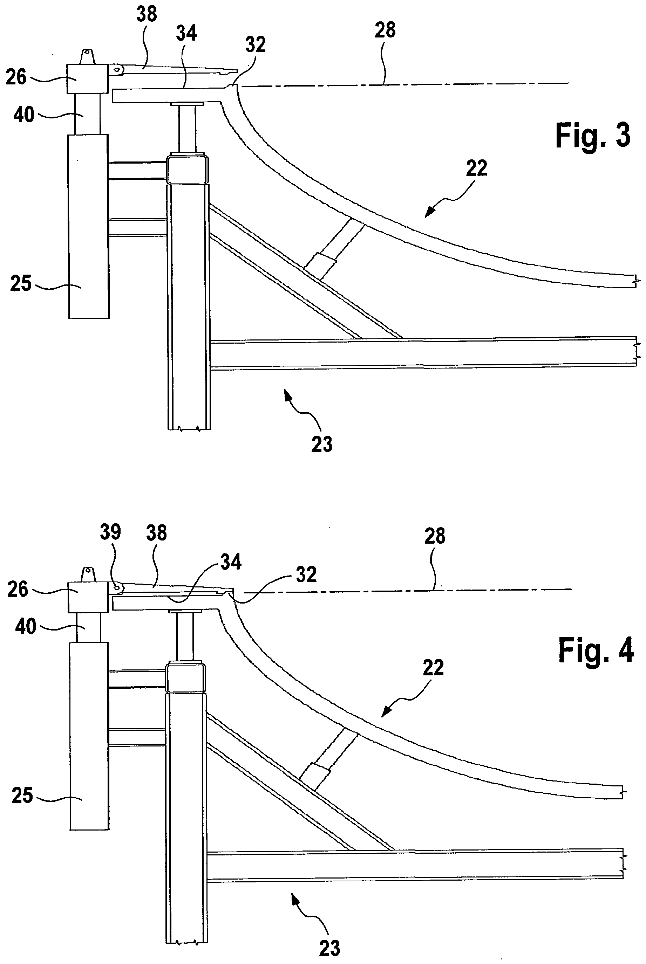

Anhand der Figuren 3 bis 14 werden nachfolgend die Funktion der Verfahreinheit 24 und der Ablauf bei der Herstellung eines Rotorflügels für eine Windkraftanlage erläutert. Dabei wird davon ausgegangen, dass sich in beiden Formschalen 20, 22 je eine ausgehärtete Halbschale zur Herstellung des Rotorflügels befindet. Beide Formschalen 20, 22 sind mit nach oben weisender Öffnung angeordnet, entsprechend den Figuren 1 und 2. Überstehende Ränder der Halbschalen (nicht gezeigt) liegen zumindest teilweise auf den Quetschkanten 31, 32 oder auf den Formrändern 33, 34. Erforderlich ist das an sich bekannte Anheben der Formschale 22 mit Gestell 23, das Drehen derselben um 180 Grad und das Ablegen auf der stationären Formschale 20 mit Gestell 21.

Ausgehend von der Position der Dreheinheit 26 und des Halterarms 38 in Figur 1 wird zum Erreichen der Stellung gemäß Figur 3 zunächst die Lineareinheit 25 aktiviert, so dass die Dreheinheit 26 an einer Kolbenstange 40 nach oben ausfährt in eine Außenposition, entsprechend der Darstellung in Figur 3. Der Haltearm 38 befindet sich aber noch in der Stellung gemäß Figur 1. Anschließend dreht die Dreheinheit 26 mit dem Haltearm 38 um 90 Grad nach außen, also in Figur 1 nach links. Sodann drehen Dreheinheit 26 und Haltearm 38 um weitere 90 Grad. Dabei wird der Haltearm 38 in eine waagerechte Position ausgeklappt (nicht gezeigt) und erstreckt sich dann in die Bildebene hinein. Danach wird der Haltearm 38 um weitere 90 Grad bis in die Position gemäß Figur 3 gedreht.

Das Anheben des Haltearms 38 aus der vertikalen Stellung gemäß Figur 1 in die horizontale Stellung gemäß Figur 3 kann durch einen nicht gezeigten Antrieb oder aber manuell erfolgen. Möglich ist auch eine zwangsgesteuerte Führung in Abhängigkeit von der Bewegung der Dreheinheit 26 oder der Lineareinheit 25.

In Figur 3 steht der Haltearm 38 mit geringem Abstand über der Quetschkante 32 mit dem Formrand 34. Wie aus Figur 4 ersichtlich, wird der Haltearm 38 mit der Dreheinheit 26 im nächsten Schritt leicht abgesenkt in eine mittlere Position und liegt dann so dicht wie möglich an der Quetschkante 32 bzw. am Formenrand 34 an. Dadurch ist der nicht gezeigte überstehende Rand der ausgehärteten Halbschale zwischen Quetschkante 32 und Haltearm 38 eingeklemmt. Auf diese Weise hat der Haltearm 38 die Funktion einer Schalensicherungsklammer.

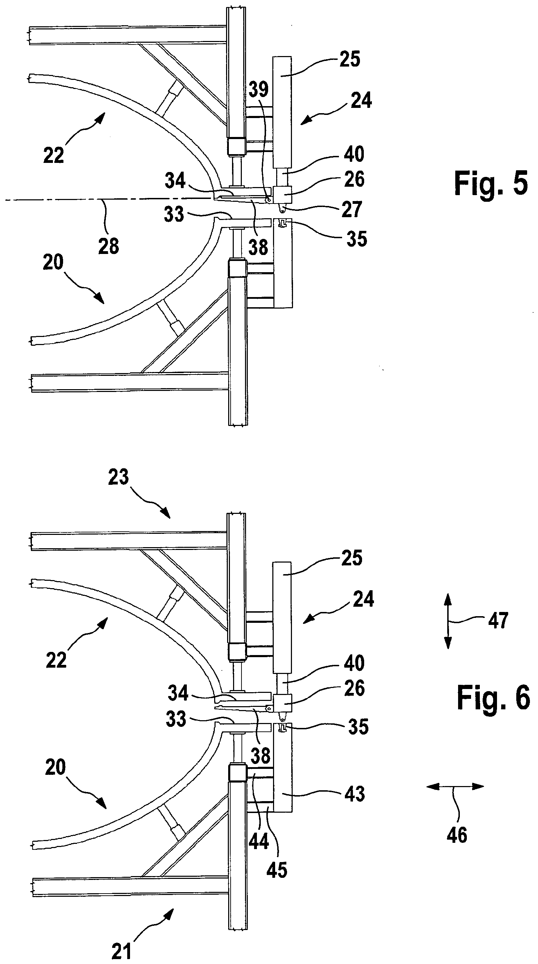

Anschließend wird die Formschale 22 mit dem Gestell 23 angehoben, vorzugsweise durch ein nicht gezeigtes Gelenksystem um 180 Grad verschwenkt und in einer Nahposition über der stationären Formschale 20 gehalten, siehe Figur 5. Erkennbar ist noch ein deutlicher Abstand zwischen den Formrändern 33, 34, während der Haltearm 38 noch seine Haltefunktion ausübt und so dicht wie möglich am Formrand 34 anliegt. Der Verriegelungskopf 27 befindet sich mit Abstand oberhalb der Verriegelungsaufnahme 35.

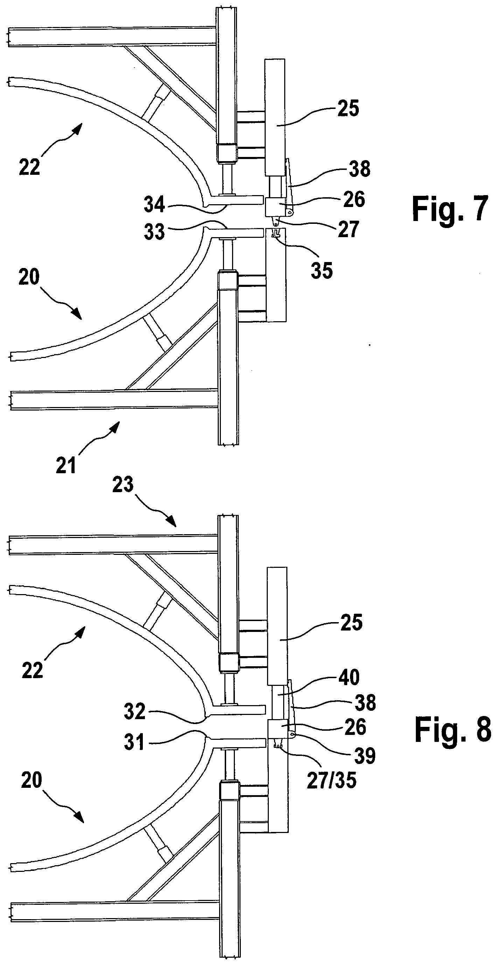

Im nächsten Schritt wird die Dreheinheit 26 durch die Kolbenstange 40 der die Lineareinheit 25 wieder in die Außenposition gemäß Figur 3 bewegt, also in Figur 6 in Abwärtsrichtung. Dadurch löst sich der Haltearm 38 vom Formrand 34. Anschließend schwenkt die Dreheinheit 26 den Haltearm 38 um 180 Grad. Während der ersten 90 Grad bleibt der Haltearm 38 horizontal ausgeklappt. Danach schwenkt der Haltearm 38 bis in die vertikale Stellung gemäß Figur 7 und kann dabei an der Lineareinheit 25 zur Anlage kommen.

Im nächsten Schritt wird der Verriegelungskopf 27 durch die Lineareinheit 25 weiter ausgefahren, also in Figur 8 nach unten abgesenkt bis in die Verriegelungsaufnahme 35 hinein. Die beiden Formschalen 20, 22 weisen weiterhin den gleichen Abstand zueinander wie in den Figuren 5 bis 7 auf. Dabei werden die Formschalen 20, 22 von dem nicht gezeigten Gelenksystem in der Nahposition auf Abstand gehalten.

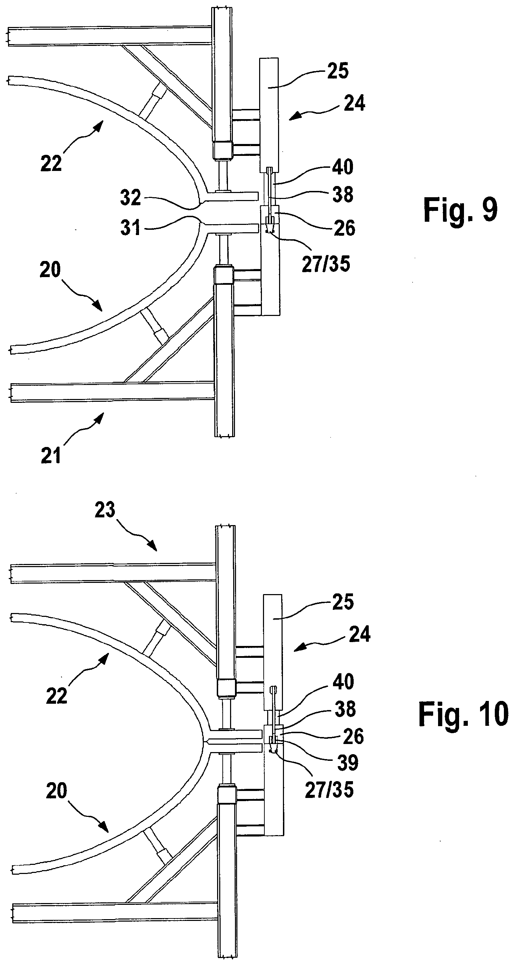

Anschließend oder in einem späteren Schritt wird der Verriegelungskopf 27 von der Dreheinheit 26 um 90 Grad gedreht in die Position gemäß Figur 9. Der Verriegelungskopf 27 ist dann in der Verriegelungsaufnahme 35 verriegelt und kann durch einfachen Zug nicht mehr aus der Verriegelungsaufnahme 35 austreten. Es besteht eine formschlüssige Verbindung zwischen den beiden Gestellen 21, 23, über die Zugkräfte und Druckkräfte übertragen werden können. Das nicht gezeigte Gelenksystem, welches die Gestelle 21, 23 noch miteinander verbindet, kann gelöst werden, so dass die Gestelle 21, 23 nur noch über die Vielzahl von Verfahreinheiten 24 mit den korrespondierenden Verriegelungsaufnahmen 35 verbunden sind.

Im nächsten Schritt fährt die Lineareinheit 25 den Verriegelungskopf 27 ein Stück weit zurück, so dass die Quetschkanten 31, 32 mit den nicht gezeigten überstehenden Rändern der ausgehärteten Halbschalen in einer Kontaktposition übereinander liegen und mittels vorher aufgebrachtem Klebstoff miteinander verkleben können. Hierzu kann die Lineareinheit 25 eine definierte Zugkraft aufbringen und/oder eine genau definierte Position des Verriegelungskopfes 27 halten. Der in Figur 10 ersichtliche Abstand zwischen den Formrändern 33, 34 wird als Klebespalt bezeichnet und kann über Sensoren oder mechanische Anschläge eingestellt und gehalten werden. Möglich ist eine getrennte, individuelle Steuerung für jede einzelne Verfahreinheit 24.

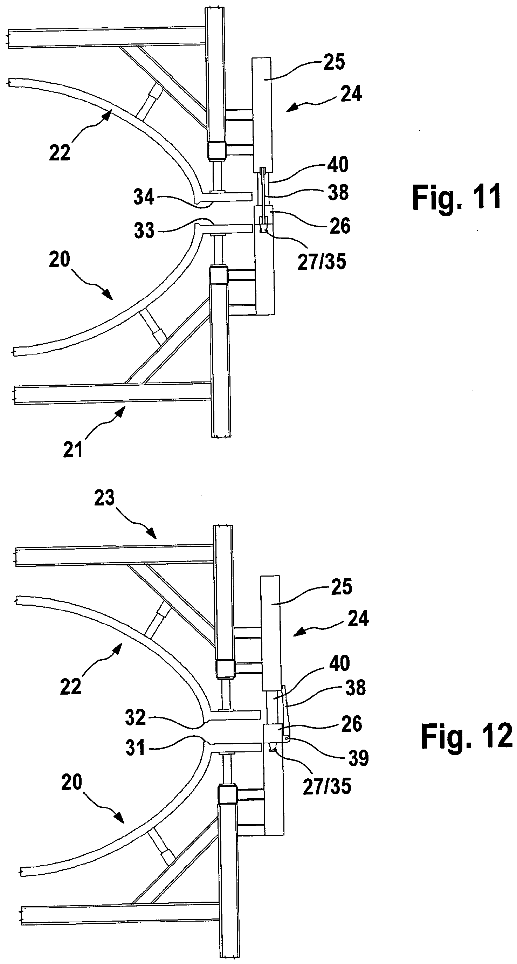

Nach dem Aushärten des Klebstoffs und der dauerhaften Verbindung der nicht gezeigten Halbschalen werden die Formschalen 20, 22 wieder voneinander getrennt durch Anheben der oberen Formschale 22. Hierzu wird die Lineareinheit 25 aktiviert zum Ausfahren der Kolbenstange 40, siehe Figur 11. Der Verriegelungskopf 27 ist vorzugsweise weiterhin mit der Verriegelungsaufnahme 35 verriegelt. Durch das Anheben der Formschale 22 wird die bislang daran haftende Halbschale herausgelöst bzw. entformt. Die von der Verfahreinheit 24 bzw. der Lineareinheit 25 getragene Last verringert sich deutlich.

Im nächsten Schritt wird der Verriegelungskopf 27 mit der Dreheinheit 26 um 90 Grad zurück gedreht, so dass die Verriegelung gelöst ist. Auch wandert der Haltearm 38 in die Figur 12 gezeigte, immer noch vertikale Position. Dabei oder zuvor kann die obere Formschale 22 wieder mit dem nicht gezeigten Gelenksystem verbunden werden, welches nun die Last des bewegbaren Gestells 23 mit der Formschale 22 trägt.

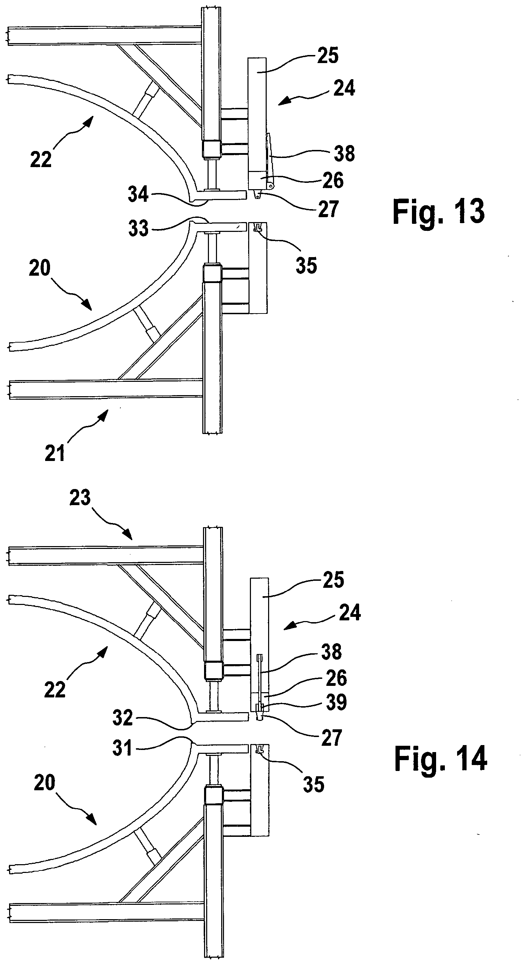

Im nächsten Schritt fährt die Lineareinheit 25 die Kolbenstange 40 vollständig ein, siehe Figur 13. Zuletzt schwenkt die Dreheinheit 26 den (immer noch) vertikal stehenden Haltearm 38 zurück in die 0 Grad-Parkstellung gemäß Figur 14. Anschließend verlagert das Gelenksystem das bewegbare Gestell 23 mit der Formschale 22 um 180 Grad zurück in die Position gemäß Figur 1 bis zur Ablage auf einem Boden.

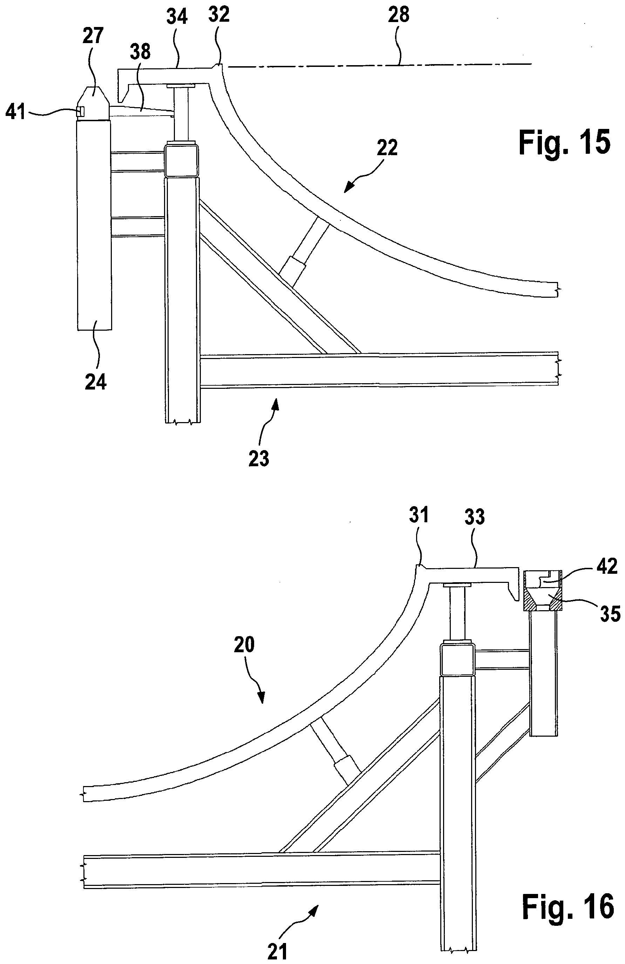

Alternativ zu den voranstehenden Ausführungen kann der Haltearm 38 auch an der Dreheinheit 26 horizontal feststehend ausgebildet sein, siehe Figur 15. In der dort gezeigten Parkstellung ist die Dreheinheit 26 soweit abgesenkt, dass der Haltearm 38 in einer 45-Grad-Parkstellung schräg unterhalb des Formrandes 34 steht und so den Arbeitsbereich oberhalb des Formenrandes 34 nicht einengt. In dieser Variante ist außerdem ein seitlicher Zapfen 41 an der breitesten Stelle des Verriegelungskopfes 27 vorgesehen.

Korrespondierend zum Zapfen 41 und Haltearm 38 weist die Verriegelungsaufnahme 35 in Fig. 16 am Eingangsbereich, also an ihrer breitetesten Stelle, zwei einander gegenüberliegende L-förmige Nuten auf, von denen hier nur eine Nut 42 sichtbar ist. Die Nuten haben hier die Funktion einer Kulisse, so dass Zapfen 41, Haltearm 38 einerseits und Nuten andererseits nach Art eines Bajonettverschlusses zusammenwirken können. Der Haltearm 38 hat dann neben seiner Funktion als Sicherungsmittel zugleich eine Funktion als Verriegelungsmittel.

Alternativ ist nur eine der beiden Nuten vorhanden, die dann mit dem Haltearm 38 oder dem Zapfen 41 zusammenwirkt. Beispielsweise ist nur der Haltearm 38 ohne Zapfen 41 vorhanden.

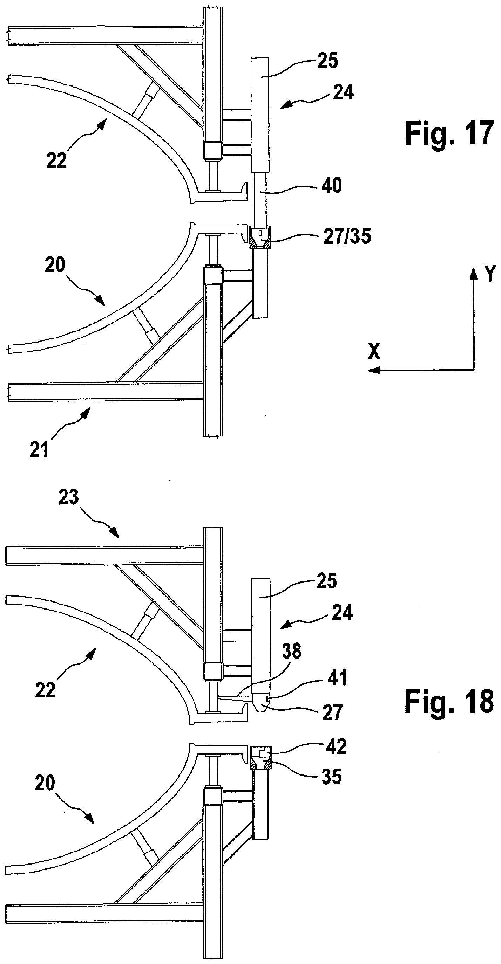

Gemäß Figur 17 ist der Verriegelungskopf 27 in die Verriegelungsaufnahme 35 eingefahren. Zugleich ist der Haltearm 38 in eine Position senkrecht zur Bildebene verschwenkt, so dass Verriegelungskopf 27 und Verriegelungsaufnahme 35 verriegelt sind. Zum Öffnen der Verriegelung muss der Haltearm 38 um 45 Grad zurückgeschwenkt werden in Richtung auf die Formschale 22. Anschließend kann der Verriegelungskopf 27 aus der Verriegelungsaufnahme 35 herausgezogen werden.

Eine weitere Besonderheit ist Figur 2 entnehmbar. Die Verriegelungsaufnahme 35 ist in einem oberen Ende eines stabförmigen Halters 43 angeordnet. Der Halter 43 ist am Gestell 21 mittels zweier Querträger 44, 45 gelagert. Die Querträger 44, 45 bilden so eine Halterung für die Verriegelungsaufnahme 35. Vorzugsweise ist die Halterung längenverstellbar ausgebildet und ermöglicht eine Justierung der Verriegelungsaufnahme 35 in Richtung eines Doppelpfeils 46, nämlich parallel zur Bildebene und quer zur Bewegungsrichtung des Verriegelungskopfes 27. Hierzu können die Querträger 44, 45 in ihrer wirksamen Länge veränderbar sein, etwa durch teleskopierbare oder ineinander schraubbare Teilstücke. Die Bewegungsrichtung des Verriegelungskopfes 27 in die Verriegelungsaufnahme 35 hinein ist in Figur 2 durch einen Doppelpfeil 47 dargestellt. Alternativ oder zusätzlich sind der Verriegelungskopf 27 oder die Lineareinheit 24 quer, in Richtung des Doppelpfeils 46 bewegbar, siehe auch Figur 6.

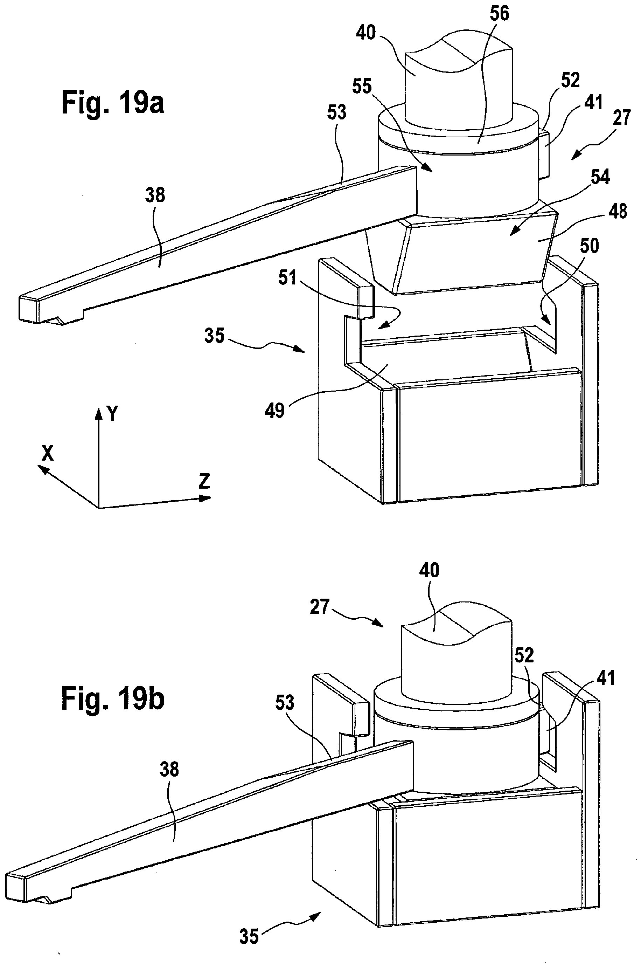

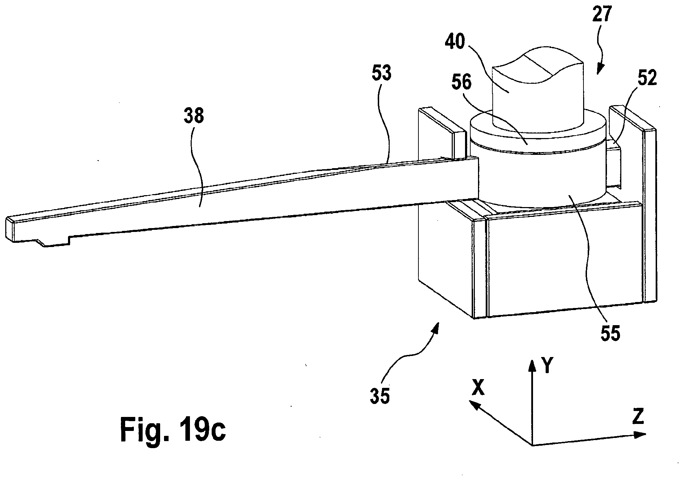

Einen horizontal feststehenden Haltearm zeigen auch die Figuren 19a, 19b, 19c. Außerdem sind in diesem Ausführungsbeispiel Verriegelungskopf 27 und Verriegelungsaufnahme 35 abweichend gestaltet.

Der Verriegelungskopf 27 ist keilförmig ausgebildet mit einem trapezförmigen Querschnitt in X-Y-Ebene und rechteckigem Querschnitt in Y-Z-Ebene. Dabei verläuft die Z-Richtung etwa parallel zu einer nicht gezeigten Gelenklinie zwischen den Formschalen 20, 22 bzw. in Längsrichtung eines herzustellenden Rotorblattes für eine Windenergieanlage. Die Keilform des Verriegelungskopfes 27 gewährleistet eine Zentrierung bzw. den Ausgleich von Abweichungen in X-Richtung beim Zusammenführen der Formschalen 20, 22.

Zusätzlich weist in diesem Fall auch die Verriegelungsaufnahme 35 eine Keilform auf, nämlich einen keilförmigen Innenquerschnitt so dass beidseitige Keilflächen 48 des Verriegelungskopfes 27 an beidseitigen Keilflächen 49 der Verriegelungsaufnahme 35 entlang gleiten können.

Anstelle einer L-förmigen Nut weist die Verriegelungsaufnahme 35 hier zwei keilförmige Nuten 50, 51 auf, in die Haltearm 38 und Zapfen 41 eingreifen können. Passend zur Keilform der Nuten 50, 51 sind Haltearm 38 und Zapfen 41 zumindest oberseitig mit schrägen Anlageflächen 52, 53 versehen, deren Neigungen der Keilform der Nuten 50, 51 angepasst sind.

Anhand der Figuren 19a, 19b, 19c ist das Zusammenwirken von Verriegelungskopf 27 und Verriegelungsaufnahme 35 dieses Ausführungsbeispiels erkennbar. Gemäß Figur 19a steht der Haltearm 38 aus der Y-Z-Ebene schräg heraus, korrespondierend hierzu der Zapfen 41. Der Verriegelungskopf 27 kann in dieser Position des Haltearms 38 in die Verriegelungsaufnahme 35 eintauchen. Dabei kommen die Keilflächen 48, 49 aneinander zu liegen. Diese Position ist in Figur 19b dargestellt. Anschließend schwenken Haltearm 38 und Zapfen 41 in die keilförmigen Nuten 50, 51 ein. Um dies zu ermöglichen, ist der Verriegelungskopf 27 unterteilt in Keil 54 und Rotor 55. Haltearm 38 und Zapfen 41 sind am Rotor 55 gehalten, während der Keil 54 fest mit der Kolbenstange 40 verbunden sein kann. Der Rotor 55 ist durch einen nicht gezeigten pneumatischen, hydraulischen oder elektrischen Antrieb relativ zur Kolbenstange 40 verdrehbar.

Gelagert ist der zylindrische Rotor 55 zwischen dem Keil 54 und einer Lagerplatte 56, welche mit der Kolbenstange 40 fest verbunden sein kann.

**Bezugszeichenliste:**

| | | | |
|---|---|---|---|
| 20 | stationäre Formschale | 46 | Doppelpfeil |
| 21 | Gestell | 47 | Doppelpfeil |
| 22 | Formschale | 48 | Keilfläche |
| 23 | bewegbares Gestell | 49 | Keilfläche |
| 24 | Verfahreinheit | 50 | Keilförmige Nut |
| 25 | Lineareinheit | 51 | Keilförmige Nut |
| 26 | Verdreheinheit | 52 | Schrägfläche |
| 27 | Verriegelungskopf | 53 | Schrägfläche |
| 28 | Öffnungsebene | 54 | Keil |
| 29 | Doppelpfeil | 55 | Rotor |
| 30 | Rotationspfeil | 56 | Lagerplatte |
| 31 | Quetschkante | | |
| 32 | Quetschkante | | |
| 33 | Formrand | | |
| 34 | Formrand | | |
| 35 | Verriegelungsaufnahme | | |
| 36 | Nasen | | |
| 37 | Nuten | | |
| 38 | Haltearm | | |
| 39 | Gelenk | | |
| 40 | Kolbenstange | | |
| 41 | Zapfen | | |
| 42 | Nut | | |
| 43 | Halter | | |
| 44 | Querträger | | |
| 45 | Querträger | | |

## Patentansprüche

1. Formwerkzeuganordnung, insbesondere zum Herstellen von Rotorblättern für Windkraftanlagen, mit einer ersten Formschale (20) und einer zweiten Formschale (22) zur Aufnahme je eines Werkstückteils, wobei die beiden Formschalen (20, 22) in einer Nahposition einander zugewandt sind aber nicht an einander anliegen, mit Sicherungsmitteln zum Halten eines Werkstückteils in wenigstens einer der Formschalen (20, 22) und mit Zentriermitteln zum Zentrieren der beiden Formschalen (20, 22) zueinander in der Nahposition oder während einer Annährung der Formschalen, **dadurch gekennzeichnet, dass** Sicherungsmittel und Zentriermittel mechanisch miteinander gekoppelt sind.

2. Formwerkzeuganordnung nach Anspruch 1, **dadurch gekennzeichnet, dass** Zentriermittel und Sicherungsmittel durch gemeinsame Antriebsmittel miteinander gekoppelt sind.

3. Formwerkzeuganordnung nach Anspruch 1 oder 2, **dadurch gekennzeichnet, dass** die Zentriermittel jeweils Zentrierkopf und Zentrieraufnahme beinhalten, wobei der Zentrierkopf der einen Formschale (22) und die Zentrieraufnahme der anderen Formschale (20) zugeordnet ist, und wobei Zentrierkopf und Zentrieraufnahme vorzugsweise passend zueinander konisch ausgebildet sind.

4. Formwerkzeuganordnung nach Anspruch 3, **dadurch gekennzeichnet, dass** Zentriermittel und Sicherungsmittel derart mechanisch miteinander gekoppelt sind, dass bei einer Bewegung von Zentrierkopf oder Zentrieraufnahme in Richtung auf die jeweils andere Formschale (20, 22) zugleich das Sicherungsmittel oder ein Teil desselben in Richtung auf die andere Formschale (20, 22) bewegt wird.

5. Formwerkzeuganordnung, insbesondere zum Herstellen von Rotorblättern für Windkraftanlagen, mit einer ersten Formschale (20) und einer zweiten Formschale (22) zur Aufnahme je eines Werkstückteils, wobei die beiden Formschalen (20, 22) in einer Nahposition einander zugewandt sind aber nicht aneinander anliegen, und mit Sicherungsmitteln zum Halten eines Werkstückteils in wenigstens einer der Formschalen (20, 22), insbesondere nach einem der voranstehenden Ansprüche, **gekennzeichnet durch** Verriegelungsmittel für eine Zugkräfte aufnehmende Verbindung zwischen den beiden Formschalen (20, 22).

6. Formwerkzeuganordnung nach Anspruch 5, **dadurch gekennzeichnet, dass** Sicherungsmittel und Verriegelungsmittel durch gemeinsame Antriebsmittel miteinander gekoppelt sind.

7. Formwerkzeuganordnung nach Anspruch 5 oder 6, **dadurch gekennzeichnet, dass** die Verriegelungsmittel jeweils Verriegelungskopf (27) und Verriegelungsaufnahme (35) beinhalten, wobei der Verriegelungskopf (27) der einen Formschale (22) und die Verriegelungsaufnahme (35) der anderen Formschale (20) zugeordnet ist, und wobei der Verriegelungskopf (27) vorzugsweise durch Stecken und Drehen mit der Verriegelungsaufnahme (35) verbindbar ist.

8. Formwerkzeuganordnung nach Anspruch 7, **dadurch gekennzeichnet, dass** Sicherungsmittel und Verriegelungsmittel mechanisch miteinander gekoppelt sind, derart, dass bei einer Bewegung von Verriegelungskopf (27) oder Verriegelungsaufnahme (35) zugleich das Sicherungsmittel bewegt wird.

9. Formwerkzeuganordnung nach Anspruch 7 oder 8, **dadurch gekennzeichnet, dass** der Verriegelungskopf (27) drehbar ist, aus einer Einfahrposition in eine Verriegelungsposition und insbesondere aus einer Anfangsposition in die Einfahrposition.

10. Formwerkzeuganordnung nach Anspruch 9, **dadurch gekennzeichnet, dass** der Verriegelungskopf (27) in einem Bereich zwischen Anfangsposition und Einfahrposition bewegt wird, wenn ein Haltearm (38) des Sicherungsmittels von einer Sicherungsposition in eine freie Position bewegt wird.

11. Formwerkzeuganordnung nach Anspruch 5 oder einem der weiteren Ansprüche, **dadurch gekennzeichnet, dass** dem Verriegelungsmittel eine Lineareinheit (25) zugeordnet ist, mit der insbesondere ein Verriegelungskopf (27) im Wesentlichen in Richtung senkrecht zu einer Öffnungsebene (28) der zugeordneten Formschale (22) bewegbar ist.

12. Formwerkzeuganordnung nach Anspruch 11, **dadurch gekennzeichnet, dass** mittels der Lineareinheit (25) die Formschalen (20, 22) aus der Nahposition in Richtung auf eine Kontaktposition bewegbar sind, in der die Formschalen (20, 22) und/oder in den Formschalen liegende Werkstückteile miteinander Kontakt haben.

13. Formwerkzeuganordnung nach Anspruch 5 oder einem der weiteren Ansprüche, **dadurch gekennzeichnet, dass** dem Verriegelungsmittel eine Dreheinheit (26) zugeordnet ist, mit der ein Verriegelungskopf (27) relativ zu einer Verriegelungsaufnahme (35) verdrehbar ist.

14. Formwerkzeuganordnung nach Anspruch 13, **dadurch gekennzeichnet, dass** mit der Dreheinheit (26) zugleich ein Haltearm (38) des Sicherungsmittels verschwenkbar ist.

15. Formwerkzeuganordnung nach einem der Ansprüche 7 bis 10, **dadurch gekennzeichnet, dass** der Verriegelungskopf (27) zugleich Zentrierkopf ist, und dass die Verriegelungsaufnahme (35) zugleich Zentrieraufnahme ist.

16. Formwerkzeuganordnung nach Anspruch 1 oder einem der weiteren Ansprüche, **dadurch gekennzeichnet, dass** ein Haltearm (38) des Sicherungsmittels um eine Schwenkachse schwenkbar und um eine hierzu senkrechte Klappachse klappbar ist.

17. Formwerkzeuganordnung nach Anspruch 1 oder einem der weiteren Ansprüche, **dadurch gekennzeichnet, dass** Sicherungsmittel, Zentriermittel und/oder Verriegelungsmittel Teile einer Verfahreinheit (24) sind, und dass entlang wenigstens einer der beiden Formschalen (20, 22), nämlich an deren Längsseiten, mehrere Verfahreinheiten (24) in definierten Abständen vorgesehen sind.

18. Formwerkzeuganordnung, insbesondere zum Herstellen von Rotorblättern für Windkraftanlagen, mit einer ersten Formschale (20) und einer zweiten Formschale (22) zur Aufnahme je eines Werkstückteils, wobei die beiden Formschalen (20, 22) in einer Nahposition einander zugewandt sind, aber nicht aneinander anliegen, und wobei Zentriermittel vorgesehen sind, zum Zentrieren der beiden Formschalen (20, 22) zueinander in der Nahposition, insbesondere nach einem der voranstehenden Ansprüche, **dadurch gekennzeichnet, dass** den Zentriermitteln Verriegelungsmittel zugeordnet sind, derart, dass über die Zentriermittel und Verriegelungsmittel eine Verbindung zwischen den beiden Formschalen (20, 22) herstellbar ist, wobei die Verbindung auch Zugkräfte aufnimmt.

19. Formwerkzeuganordnung nach Anspruch 18, **dadurch gekennzeichnet, dass** die Zentriermittel in wenigstens einer Richtung zentrierend wirken, insbesondere quer zu einer Längsrichtung der Formschalen (20, 22).

20. Formwerkzeuganordnung nach Anspruch 18 oder 19, **dadurch gekennzeichnet, dass** die Zentriermittel parallel zu einer Öffnungsebene (28) verstellbar sind, insbesondere quer zu einer Längsrichtung der Formschalen (20, 22).

21. Formwerkzeuganordnung nach Anspruch 18 oder einem der weiteren Ansprüche, **dadurch gekennzeichnet, dass** die Verriegelungsmittel mit einer Antriebseinheit verbunden sind, zum Bewegen der beiden Formschalen (20, 22) aus der Nahposition in eine noch nähere Position und umgekehrt.

22. Verfahren zum Herstellen eines Werkstücks aus zwei halbschalenartigen Werkstückteilen, insbesondere zum Herstellen eines Rotorflügels für Windkraftanlagen, unter Verwendung einer Formwerkzeuganordnung nach einem der voranstehenden Ansprüche.
